# NEW EUROPEAN PATENT SPECIFICATION

(11) **EP 1 534 773 B2**
(45) Date of publication and mention of the opposition decision: **20.01.2016**
(45) Mention of the grant of the patent: 28.10.2009
(21) Application number: 03766128.7
(22) Date of filing: 03.07.2003
(51) Int. Cl.: C08J 9/224

(54) **BEADS OF EXPANDABLE VINYLAROMATIC POLYMERS AND PROCESS FOR THEIR PREPARATION**
TEILCHEN AUS EXPANDIERBAREN VINYLAROMATISCHEN POLYMEREN UND HERSTELLUNGSVERFAHREN
PERLES DE POLYMERES VINYLAROMATIQUES EXPANSIBLES ET PROCEDE DE PREPARATION DE CES PERLES

(30) Priority: 31.07.2002 IT MI20021711
(43) Date of publication of application: 01.06.2005
(73) Proprietor: versalis S.p.A., 20097 San Donato Milanese (MI) (IT)
(72) Inventor: LANFREDI, Roberto, I-46030 Virgilio-Mantova (IT); GHIDONI, Dario, I-46023 Gonzaga-Mantova (IT)
(74) Representative: Bottero, Carlo
(86) International application number: PCT/EP2003/007225
(87) International publication number: WO 2004/013216

(56) References cited:
- EP-A1- 1 604 969
- EP-A2- 0 915 127
- EP-B1- 0 856 548
- WO-A-92/11298
- GB-A- 1 301 473
- GB-A- 1 409 285
- GB-A- 1 409 285
- US-A- 3 086 247
- US-A- 3 558 534
- US-A- 3 991 020
- US-A- 4 692 472
- US-A- 4 772 441
- US-A- 5 115 066
- US-A- 5 124 365
- US-A- 5 240 657
- US-B1- 6 384 094
- DATABASE WPI Section Ch, Week 198449 Derwent Publications Ltd., London, GB; Class A31, AN 1984-304985 XP002224215 & JP 59 191744 A (TOYO KAGAKU KK) 30 October 1984 (1984-10-30)
- O'NEIL M.J. ET AL: 'The Merck Index', vol. 13, 2001, MERCK RESEARCH LABORATORIES page 1735
- Akrochem Corporation, Stearates Akrochem Zinc Stearate-Powder
- www.belikechem.com/productsview.php?id=123& proid67
- www.buzzle.com/articles/talcum-powder-ingre dients.html
- www.sdxunda.cn/eng/ArticleShow.asp?ArticleI D=88
- Handbook of Mineralogy 2001 Talc
- Handbook of Mineralogy Dolomite
- Black Iron Oxide / Magnetite (Fe3O4) powder from READE Internet article http:/www.readde.com/products/35-oxides-met allic-powders/57... 04.02.2011
- Analysis of the commercial product Kemilub EZ (Zn stearate) sent by the producerUnion Derivan SA (1st Revision 7/1998)
- Decree of the Commerce Department of Spain dated 13 November 1975, indicating the composition of Kemilub EZ
- Quality analysis of Zn stearate, sold by Faci supplier dated 18.04.1991 and 13.01.1997
- Quality analysis of a Zn stearate, sold by SO.G.I.S. Industria Chimica S.p.A. (adifferent supplier), on 03.06.1991 and 13.04.1992; the description of the methodof analysis of determination of ashes APR-015 (in Italian and in English)
- Quality analysis of a Zn stearate as raw material, carried out by Enichem on 09/98; the description of the method of analysis of determination of ashes in Zn stearate MA 5058/ (in Italian and in English)
- Extract from the website of Belike (the same supplier of annex C filed by the Opponent)

## Description

The present invention relates to beads of expandable vinylaromatic polymers and a process for their preparation.

More specifically, the present invention relates to an expandable polystyrene in the form of beads with a reduced formation of lumps and the process for its preparation.

Vinylaromatic polymers, and among these, polystyrene in particular, are known products which have been adopted for a long time for preparing compact and/or expanded articles which can be used in various applicative sectors, among which the most important are household appliances, the transport and building industries, office machines; etc. A particularly interesting sector is the field of thermal insulation, where vinylaromatic polymers are essentially used in expanded form.

These expanded products are obtained by swelling, in a pre-expander, beads of expandable polymer previously impregnated with an expanding agent and molding the swollen particles inside a closed mould by means of the contemporaneous effect of pressure and temperature.

The swelling, or pre-expansion, of the particles is generally effected with vapour, or another gas, maintained at a temperature slightly higher than the glass transition temperature (Tg) of the polymer. During this phase, the particles tend to stick to each other and to avoid this drawback, they are treated with additives generally known as anti-lumping additives.

The addition of metallic stearates, such as magnesium stearate, is known, for example. This additive is extremely effective in preventing the beads from sticking during the pre-expansion phase but results in poor adhesion in the moulding phase during the preparation of the end-products.

U.S. patent 3,520,833 describes the use of lecithin, added with the expanding agent during the impregnation of the particles, as anti-lumping additive. Unfortunately, lecithin gives the end-products an unacceptable odour making their use problematical.

U.S. patent 3,444,104 describes the use of calcium and silicon aluminates. The lumps, in this case, are eliminated and the adhesion remains acceptable. The density of the beads in expansion, however, is poor.

U.S. patent 3,462,293 describes the use of a polymeric latex, for example polyethylene or SAN copolymer, deposited on the particles. The subsequent drying treatment of the latex with air, however, requires long times which make the preparation process quite unsuitable for industrial development.

U.S. Patent 5,124,365 describes styrene polymer foam particles containing a solid coating comprising a water-insoluble solid chosen from carbonates, carboxylic acid salts, oxides and mixed oxides of metals from group II, III and/or IV of the periodic table.

Finally, European patent 449,065 describes the use of oxides such as silica, alumina and titanium oxide. Although these products have a good capacity against the formation of lumps, they have the disadvantage, as specified above, of reducing the adhesion of the expanded beads during the moulding phase.

There are evident disadvantages associated with these systems for avoiding the formation of lumps as they either jeopardize the adhesion of the expanded beads, or the expansion of the beads themselves or they require processes, for example drying, which are too elaborate for being conveniently used in the industrial field.

The Applicant has now found a simple system for eliminating the formation of agglomerates of swollen vinylaromatic polymer beads without jeopardizing the subsequent adhesion and/or expandability.

An object of the present invention therefore relates to beads of expandable vinylaromatic polymers which comprise:
a) a matrix obtained by polymerizing 50-100% by weight of one or more vinylaromatic monomers and 0-50% by weight of at least one copolymerizable monomer;
b) 1-10% by weight, calculated with respect to the polymer (a), of an expanding agent englobed in the polymeric matrix;
c) 2 ppm-2% by weight, calculated with respect to the polymer (a), of an anti-lumping additive, distributed on the surface of the beads, selected from powders of oxides of iron and copper, or from powders of oxides of iron, copper and zinc, mixed with the corresponding ester of fatty acids selected from stearic acid, palmitic acid and myristic acid.

A further object of the present invention relates to a process for the preparation of expandable vinylaromatic polymer beads which comprises:
- polymerizing 50-100% by weight of one or more vinylaromatic monomers and 0-50% by weight of at least one co-polymerizable monomer;
- englobing an expanding agent in the polymeric matrix; and
- distributing on the surface of the beads obtained 2 ppm-2% by weight, calculated with respect to the polymer, of an anti-lumping additive selected from powders of oxides of iron and copper, or from powders of oxides of iron, copper and zinc, mixed with the corresponding ester of fatty acids selected from stearic acid, palmitic acid and myristic acid.

According to the present invention, the vinylaromatic polymers can be obtained with a polymerization process in aqueous suspension or continuous mass. In particular, the polymerization in suspension of the vinylaromatic monomer is carried out under conditions and in the presence of additives well known in the art. In addition to the suspending agent, selected from insoluble inorganic salts, for example calcium or magnesium such as tricalcium phosphate or magnesium phosphate, or from organic suspending agents such as polyvinylpyrrolidone, the polymerization is carried out in the presence of an initiating system or an expanding system.

The initiating system generally comprises two peroxides, one with a halving time of an hour at 85-95°C and the other with a halving time of an hour at 110-120°C. Examples of these initiators are benzoylperoxide and terbutylperbenzoate.

Any expanding agent capable of being englobed in the polymeric matrix can be used in a combination with the vinylaromatic polymers object of the present invention. In general, liquid substances are used, with a boiling point ranging from 10 to 100°C, preferably from 20 to 80°C. Typical examples are aliphatic hydrocarbons, freon, carbon dioxide, water, etc.

The expanding agent can be added to the polymer during the polymerization phase in suspension, or, alternatively, by impregnation of the beads produced at the end of the polymerization or by injection into the molten polymer according to the continuous mass preparation process. At the end of the addition, a polymer is obtained in the form of beads, which can be transformed to produce expanded articles with a density ranging from 5 to 50 g/l, preferably from 8 to 25 g/l, with an excellent thermal insulation capacity. In order to favour the retention of the expanding agent in the polymeric matrix, additives capable of forming bonds both of the weak type (for example hydrogen bridges) or strong type (for example acid-base adducts), can be used with the expanding agent. Examples of these additives are methyl alcohol, isopropyl alcohol, dioctylphthalate, dimethylcarbonate, compounds containing an amine group, etc. These additives are generally added during the polymerization and/or englobed in the polymer together with the expanding agent.

The expanding agents are preferably added during the polymerization phase and are selected from aliphatic or cycloaliphatic hydrocarbons containing from 3 to 6 carbon atoms, such as n-pentane, iso-pentane, cyclopentane or their mixtures; halogenated derivatives of aliphatic hydrocarbons containing from 1 to 3 carbon atoms such as, for example, dichlorodifluoromethane, 1,2,2-trifluoroethane, 1,1,2-trifluoroethane; carbon dioxide and water.

The term "vinylaromatic monomer", as used in the present description and claims, essentially refers to a product which corresponds to the following general formula: 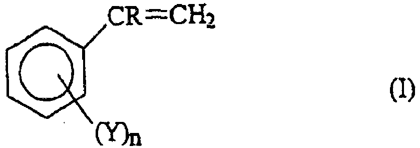 wherein n is zero or an integer ranging from 1 to 5, R is a hydrogen atom or a methyl and Y is a halogen, such as chlorine or bromine, or an alkyl or alkoxyl radical having from 1 to 4 carbon atoms.

Examples of vinylaromatic monomers having the general formula defined above are: styrene, α-methylstyrene, methylstyrene, ethylstyrene, butylstyrene, dimethylstyrene, mono-, di-, tri-, tetra- and penta-chlorostyrene, bromostyrene, methoxy-styrene, acetoxy-styrene, etc. Styrene and α-methylstyrene are the preferred vinylaromatic monomers.

The vinylaromatic monomers having general formula (I) can be used alone or in a mixture of up to 50% by weight with other copolymerizable monomers. Examples of these monomers are (meth)acrylic acid, C₁-C₄ alkyl esters of (meth)acrylic acid, such as methyl acrylate, methylmethacrylate, ethyl acrylate, ethylmethacrylate, isopropyl acrylate, butyl acrylate, amides and nitriles of (meth)acrylic acid such as acrylamide, methacrylamide, acrylonitrile, methacrylonitrile, butadiene, ethylene, divinylbenzene, maleic anhydride, etc. Preferred copolymerizable monomers are acrylonitrile and methylmethacrylate.

The vinylaromatic polymer or copolymer which is obtained has a molecular weight Mw ranging from 50,000 to 250,000, preferably from 70,000 to 200,000. In general, greater details on a process for the preparation of expandable vinylaromatic polymers in aqueous solution or, more generally, on polymerization in suspension, can be found in Journal of Macromolecular Science, Review in Macromolecular Chemistry and Physics c31 (263) 215-299 (1991) or in international patent application WO 98/51734.

Conventional additives, generally used with commercial materials, such as pigments, stabilizers, flame-retardant agents, antistatic agents, detaching agents, shock-resistant agents, etc., can be added to the expandable vinylaromatic polymers obtained with the process, object of the present invention. In particular, it is preferable to add mineral fillers of athermanous materials during the polymerization, such as graphite or refracting agents such as titanium dioxide, in a quantity ranging from 0.05 to 25% by weight, calculated with respect to the resulting polymer.

At the end of the polymerization, substantially spherical polymer beads are obtained, with an average diameter ranging from 0.2 to 2 mm, inside which the expanding agent is homogeneously dispersed.

To improve the stability of the suspension, it is possible to increase the viscosity of the reagent solution by dissolving the vinylaromatic polymer therein, in a concentration ranging from 1 to 30% by weight, preferably from 5 to 20%, calculated with respect to the monomer alone. The solution can be obtained either by dissolving a preformed polymer (for example fresh polymer or the waste products of previous polymerizations and/or expansions) in the reagent mixture or by pre-polymerizing the monomer, or mixture of monomers, in mass, in order to obtain the above concentrations, and then continuing the polymerization in aqueous suspension in the presence of the remaining additives.

At the end of the polymerization, the beads are discharged from the polymerization reactor, washed and dried.

The beads produced are subjected to pre-treatment generally applied to traditional materials and which essentially consists in:
1. coating the beads with a liquid antistatic agent such as amines, tertiary alkylamines, ethylene oxide-propylene oxide copolymers, etc. The purpose of this agent is to facilitate both the adhesion of the coating and also the screening of the beads prepared in suspension;
2. applying the coating to the above beads, said coating essentially consisting of a mixture of mono-, di- and tri-esters of glycerin (or other alcohols) with fatty acids; and
3. distributing on the surface of the beads, the anti-lumping additive selected from powders of oxides of iron (Fe₂O₃) and copper (CuO) or from powders of oxides of iron (Fe₂O₃), copper (CuO) and zinc oxide (ZnO) mixed with the corresponding ester of fatty acids selected from stearic acid, palmitic acid, myristic acid.

The anti-lumping additive is generally used in the form of powders with an average particle-size ranging from 0.1 to 50 µm.

Some illustrative but non-limiting examples are provided for a better understanding of the present invention and for its embodiment.

### COMPARATIVE EXAMPLE 1

100 parts of styrene monomer, 0.30 parts of benzoyl peroxide, 0.15 parts of terbutylperbenzoate, 100 parts of demineralized water, 0.2 parts of tricalcium phosphate and 20 ppm of sodium dodecylbenzenesulfonate, were charged into a 2 litre reactor equipped with a stirrer.

The mixture was then heated to 90°C for 4 hours and to 125°C for a further 6 hours.

The expanding agent (7 parts of n-pentane) was added during the rise from 90 to 125°C.

At the end of the polymerization, the beads were centrifuged, washed with water and dried with air at room temperature.

0.02% of diethanol alkyl amine was added to the beads of expandable polymer thus produced, which were then sieved, separating the fraction with a diameter ranging from 0.4 to 0.6 mm.

0.25% of glycerylmonostearate and 0.1% of magnesium stearate were then added to the fraction.

The product is pre-expanded the following day with vapour at a temperature of 100°C at a density of 20 g/l, evaluating the quantity of clots, which proved to be practically zero.

The expanded beads are then aged for a day and used the following day for the moulding of boxes (thickness 20 mm) at a pressure of 0.5 bars. The adhesion of the beads proved to be 5%.

### COMPARATIVE EXAMPLE 2

The beads polymerized according to Comparative example 1 were lubricated with 0.02% of diethanol alkyl amine and sieved, separating the fraction with a diameter ranging from 0.4 to 0.6 mm.

0.25% of glycerylmonostearate and 0.1% of zinc stearate were then added to the fraction.

The product is pre-expanded the following day with vapour at a temperature of 100°C at a density of 20 g/l, evaluating the quantity of lumps, which proved to be equal to 3%.

The expanded beads are then aged for a day and used the following day for the moulding of boxes (thickness 20 mm) at a pressure of 0.5 bars. The adhesion of the beads proved to be 40%.

### COMPARATIVE EXAMPLE 3

The beads polymerized according to Comparative example 1 were lubricated with 0.02% of diethanol alkyl amine and sieved, separating the fraction with a diameter ranging from 0.4 to 0.6 mm.

0.25% of glycerylmonostearate and 0.1% of silica Sipernat D 17 (diameter of 10 µm) of Degussa, were then added to the fraction.

The product is pre-expanded the following day with vapour at a temperature of 100°C at a density of 20 g/l, evaluating the quantity of lumps, which proved to be absent.

The expanded beads are then aged for a day and used the following day for the moulding of boxes (thickness 20 mm) at a pressure of 0.5 bars. The adhesion of the beads proved to be 5%.

### COMPARATIVE EXAMPLE 4

The beads polymerized according to Comparative example 1 were lubricated with 0.02% of diethanol alkyl amine and sieved, separating the fraction with a diameter ranging from 0.4 to 0.6 mm.

0.25% of glycerylmonostearate and 0.1% of alumina, with a diameter <10 µm, commercialized by Aldrich, were then added to the fraction.

The product is pre-expanded the following day with vapour at a temperature of 100°C at a density of 20 g/l, evaluating the quantity of lumps, which proved to be absent.

The expanded beads are then aged for a day and used the following day for the moulding of boxes (thickness 20 mm) at a pressure of 0.5 bars. The adhesion of the beads proved to be 5%.

### EXAMPLE 1

Comparative example 2 is repeated, reducing the zinc stearate to 0.05% and adding 0.05% of zinc oxide. There were no lumps and the adhesion was excellent, equal to 70%.

### EXAMPLE 2

Comparative example 1 is repeated, substituting the magnesium stearate with 5 ppm of ferric oxide in powder form, produced by Aldrich, with an average particle diameter of about 1 µm. There were no lumps and the adhesion was excellent, equal to 80%.

### EXAMPLE 3

Comparative example 1 is repeated, substituting the magnesium stearate with 5 ppm of copper oxide (CuO) in powder form, produced by Aldrich, with an average particle diameter < 5 µm. There were no lumps and the adhesion was excellent, equal to 70%.

## Claims

1. Beads of expandable vinylaromatic polymers which comprise:
a) a matrix obtained by polymerizing 50-100% by weight of one or more vinylaromatic monomers and 0-50% by weight of at least one copolymerizable monomer;
b) 1-10% by weight, calculated with respect to the polymer (a), of an expanding agent englobed in the polymeric matrix;
c) 2 ppm-2% by weight, calculated with respect to the polymer (a), of an anti-lumping additive, distributed on the surface of the beads, selected from powders of oxides of iron and copper, or from powders of oxides of iron, copper and zinc, mixed with the corresponding ester of fatty acids selected from stearic acid, palmitic acid and myristic acid.

2. The beads of expandable vinylaromatic polymers according to claim 1, having an average molecular weight Mw ranging from 50,000 to 250,000.

3. The beads of expandable vinylaromatic polymers according to claim 1 or 2, wherein the beads are substantially spherical with an average diameter ranging from 0.2 to 2 mm.

4. The beads of expandable vinylaromatic polymers according to any of the previous claim, wherein the beads comprise fillers of athermanous materials in quantity ranging from 0.05 to 25% by weight.

5. A process for the preparation of beads of expandable vinylaromatic polymers which comprises:
- polymerizing 50-100% by weight of one or more vinylaromatic monomers and 0-50% by weight of at least one co-polymerizable monomer;
- englobing an expanding agent in the polymeric matrix; and
- distributing on the surface of the beads obtained 2 ppm-2% by weight, calculated with respect to the polymer, of an anti-lumping additive selected from powders of oxides of iron and copper, or from powders of oxides of iron, copper and zinc, mixed with the corresponding ester of fatty acids, selected from stearic acid, palmitic acid and myristic acid.

6. The process according to claim 5, wherein the polymerization is carried out in aqueous suspension or in continuous mass.

7. The process according to claim 5 or 6, wherein the polymerization is carried out in suspension in the presence of a suspending agent, an initiating system and an expanding system.

8. The process according to claim 7, wherein the expanding system consists of liquid substances with a boiling point ranging from 10 to 100°C.

9. The process according to any of the previous claims from 5 to 8, which comprises:
1. coating the beads with a liquid antistatic agent such as amines, tertiary alkylamines, ethylene oxide-propylene oxide copolymers;
2. applying the coating to the above beads, said coating essentially consisting of a mixture of mono-, di- and tri-esters of glycerin (or other alcohols) with fatty acids; and
3. distributing on the surface of the beads, the anti-lumping additive preferably selected from powders of oxides of iron and copper, or from powders of oxides of iron, copper and zinc, mixed with the corresponding ester of fatty acids selected from stearic acid, palmitic acid and myristic acid.

10. The process according to any of the claims from 5 to 9, wherein the anti-lumping additive is used in the form of powders with an average particle-size ranging from 0.1 to 50 µm.

## Patentansprüche

1. Perlen aus expandierbaren vinylaromatischen Polymeren, welche umfassen:
a) eine Matrix, welche durch Polymerisieren von 50 bis 100 Gew.-% eines oder mehrerer vinylaromatischer Monomere und von 0 bis 50% Gew.-% wenigstens eines copolymerisierbaren Monomers erhalten worden ist,
b) 1 bis 10 Gew-%, berechnet mit Bezug auf das Polymer (a), eines Expansionsmittel, welches in der Polymermatrix eingeschlossen ist,
c) 2 ppm bis 2 Gew.-%, berechnet mit Bezug auf das Polymer (a), eines Klumpenbildung verhindernden Additivs, welches auf der Oberfläche der Perlen verteilt ist und ausgewählt ist aus Pulvern von Oxiden von Eisen und Kupfer, oder aus Pulvern von Oxiden von Eisen, Kupfer und Zink, vermischt mit den entsprechenden Fettsäureester ausgewählt aus Stearinsäure, Palmitinsäure und Myristinsäure.

2. Perlen aus expandierbaren vinylaromatischen Polymeren nach Anspruch 1, welche ein durchschnittliches Molekulargewicht Mw in einem Bereich zwischen 50.000 und 250.000 aufweisen.

3. Perlen aus expandierbaren vinylaromatischen Polymeren nach Anspruch 1 oder 2, wobei die Perlen im Wesentlichen kugelförmig mit einem durchschnittlichen Durchmesser in einem Bereich zwischen 0,2 und 2 mm sind.

4. Perlen aus expandierbaren vinylaromatischen Polymeren nach einem der vorhergehenden Ansprüche, wobei die Perlen Füllstoffe aus athermalen Materialien in einer Menge in einem Bereich zwischen 0,05 und 25 Gew.-% enthalten.

5. Verfahren zur Herstellung von Perlen aus expandierbaren vinylaromatischen Polymeren, welches umfasst:
- Polymerisieren von 50 bis 100 Gew.-% eines oder mehrerer vinylaromatischer Monomere und von 0 bis 50 Gew.-% wenigstens eines copolymerisierbaren Monomers,
- Einschließen eines Expansionsmittels in die Polymermatrix, und
- Verteilen von 2 ppm bis 2 Gew.-%, berechnet mit Bezug auf das Polymer, eines Klumpenbildung verhindernden Additivs, welches aus Pulvern von Oxiden von Eisen und Kupfer, oder aus Pulvern von Oxiden von Eisen, Kupfer und Zink, vermischt mit den entsprechenden Fettsäureester ausgewählt aus Stearinsäure, Palmitinsäure und Myristinsäure ausgewählt wird, auf der Oberfläche der erhaltenen Perlen.

6. Verfahren nach Anspruch 5, wobei die Polymerisation in einer wässrigen Suspension oder in einer kontinuierlichen Masse durchgeführt wird.

7. Verfahren nach Anspruch 5 oder 6, wobei die Polymerisation in einer Suspension in der Gegenwart eines Suspendiermittels, eines Initiationssystems und eines Expansionssystems durchgeführt wird.

8. Verfahren nach Anspruch 7, wobei das Expansionssystem aus flüssigen Verbindungen mit einem Siedepunkt in einem Bereich zwischen 10 und 100°C besteht.

9. Verfahren nach einem der vorhergehenden Ansprüche 5 bis 8, welches umfasst:
1. Beschichten der Perlen mit einem flüssigen Antistatikmittel, wie beispielsweise mit Aminen, mit tertiären Alkylaminen, mit Ethylenoxid-Propylenoxid-Copolymeren,
2. Aufbringen der Beschichtung auf die Perlen, wobei die Beschichtung im Wesentlichen aus einer Mischung von Mono-, Di- und Triestern von Glycerin (oder anderen Alkoholen) mit Fettsäuren besteht, und
3. Verteilen des Klumpen verhindernden Additivs, welches aus Pulvern von Oxiden von Eisen und Kupfer, oder aus Pulvern von Oxiden von Eisen, Kupfer und Zink, vermischt mit den entsprechenden Fettsäureester ausgewählt aus Stearinsäure, Palmitinsäure und Myristinsäure ausgewählt wird, auf der Oberfläche der Perlen.

10. Verfahren nach einem der Ansprüche 5 bis 9, wobei das Klumpen verhindernde Additiv in der Form von Pulver mit einer durchschnittlichen Partikelgröße in einem Bereich zwischen 0,1 und 50 µm eingesetzt wird.

## Revendications

1. Perles de polymères vinyl-aromatiques expansibles, qui comprennent :
a) une matrice obtenue par polymérisation de 50 à 100 % en poids d'un ou de plusieurs monomère(s) vinyl-aromatique(s) et de 0 à 50 % en poids d'au moins un monomère copolymérisable ;
b) 1 à 10 % en poids, par rapport au polymère (a), d'un agent d'expansion enfermé dans la matrice en polymère ;
c) et 2 ppm à 2 % en poids, par rapport au polymère (a), d'un adjuvant anti-agglomération, réparti à la surface des perles et choisi parmi les poudres des oxydes de fer et cuivre, ou parmi les poudres des oxydes de fer, cuivre et zinc, mélangées avec les esters d'acides gras correspondants choisi parmi acide stéarique, acide palmitique et acide myristique.

2. Perles de polymères vinyl-aromatiques expansibles, conformes à la revendication 1, dans lesquelles le polymère présente un poids moléculaire moyenne Mw de 50 000 à 250 000.

3. Perles de polymères vinyl-aromatiques expansibles, conformes à la revendication 1 ou 2, lesquelles perles sont sensiblement sphériques et présentent un diamètre moyen de 0,2 à 2 mm.

4. Perles de polymères vinyl-aromatiques expansibles, conformes à l'une des revendications précédentes, lesquelles perles comprennent des charges en matériaux non-conducteurs thermiques, en une proportion de 0,05 à 25 % en poids.

5. Procédé de préparation de perles de polymères vinyl-aromatiques expansibles, qui comprend les étapes suivantes :
a) faire polymériser 50 à 100 % en poids d'un ou de plusieurs monomère(s) vinyl-aromatique(s) et 0 à 50 % en poids d'au moins un monomère copolymérisable ;
b) enfermer un agent d'expansion dans la matrice en polymère ; et
c) répartir, à la surface des perles obtenues, 2 ppm à 2 % en poids, par rapport au polymère, d'un adjuvant anti-agglomération, choisi parmi les poudres des oxydes de fer et cuivre, ou parmi les poudres des oxydes de fer, cuivre et zinc, mélangées avec les esters d'acides gras correspondants choisi parmi acide stéarique, acide palmitique et acide myristique.

6. Procédé conforme à la revendication 5, dans lequel on effectue la polymérisation en suspension aqueuse ou en masse continue.

7. Procédé conforme à la revendication 5 ou 6, dans lequel on effectue la polymérisation en suspension, en présence d'un agent de mise en suspension, d'un système d'amorçage et d'un système d'expansion.

8. Procédé conforme à la revendication 7, dans lequel le système d'expansion consiste en des substances liquides présentant un point d'ébullition de 10 à 100 °C.

9. Procédé conforme à l'une des revendications 5 à 8 précédentes, qui comporte les étapes suivantes :
1) enduire les perles d'un agent anti-statique liquide, tel qu'une amine, une alkyl-amine tertiaire, ou un copolymère d'oxyde d'éthylène et d'oxyde de propylène ;
2) étaler sur les perles ainsi enduites un revêtement essentiellement constitué d'un mélange de monoesters, diesters et triesters de glycérol (ou d'autres alcools) et d'acides gras ; et
3) répartir à la surface des perles l'adjuvant anti-agglomération, qui est de préférence choisi parmi les poudres des oxydes de fer et cuivre, ou parmi les poudres des oxydes de fer, cuivre et zinc, mélangées avec les esters d'acides gras correspondants choisi parmi acide stéarique, acide palmitique et acide myristique.

10. Procédé conforme à l'une des revendications 5 à 9, dans lequel l'adjuvant anti-agglomération est utilisé à l'état de poudre dont les particules ont une taille moyenne de 0,1 à 50 *m.
